# EUROPÄISCHE PATENTANMELDUNG

(11) **EP 1 362 808 A1**
(43) Veröffentlichungstag der Anmeldung: **19.11.2003**
(21) Anmeldenummer: 03001801.4
(22) Anmeldetag: 28.01.2003
(51) Int. Cl.: B65G 21/20

(54) **Arbeitstisch für CNC-Maschinen**

(30) Priorität: 17.05.2002 DE 10221956
(71) Anmelder: MAKA- Max Mayer Maschinenbau GmbH, 89233 Neu-Ulm (DE)
(72) Erfinder: Mayer, Max, 89278 Nersingen (DE)
(74) Vertreter: Koch, Günther, Dipl.-Ing.

(57) **Zusammenfassung**

Beschrieben wird ein Arbeitstisch für eine CNC- Maschine, der aus einem endlosen Lamellenband besteht, auf welchem das zu bearbeitende Werkstück durch Anlegen eines Unterdrucks festsaugbar ist. Zu diesem Zweck sind die das Band bildenden gelenkig miteinander verbundenen Lamellen porös ausgebildet oder mit Perforationen versehen. Das Band läuft über eine Antriebsrolle bzw. eine Umlenkrolle und bildet gleichzeitig eine Transportvorrichtung, über die das Werkstück maßgenau von einer Arbeitsstelle nach der nächsten befördert werden kann. Die einzelnen Lamellen sind leicht auswechselbar miteinander bzw. mit seitlich verlaufenden Trägerbändern oder Trägerketten verbunden.

Das Lamellenband läuft über einem Trägertisch, unter dem eine Vakuumkammer angeordnet ist, die in verschiedene Segmente unterteilt sein kann.

## Beschreibung

Die Erfindung bezieht sich auf einen Arbeitstisch für CNC- und BAZ-Maschinen zur Holzbearbeitung und zum Transport von Werkstücken.

Um bei derartigen Bearbeitungsmaschinen die Werkstücke schnell und genau ausgerichtet auf dem Arbeitstisch festzulegen, ist es bekannt, die Werkstücke unter Anwendung eines Vakuums, beispielsweise unter Benutzung von Vakuumtellern, festzulegen. Die das Vakuum an das Werkstück anlegenden Saugelemente werden der Form des zu bearbeitenden Werkstücks angepaßt und entsprechend positioniert.

Es sind Vakuum-Durchsaugsysteme bekannt, bei denen eine durchlässige Arbeitstischfläche über ein Vakuumsystem teilflächig oder ganzflächig mit Unterdruck beaufschlagt wird, so daß flächige Werkstücke ohne zusätzliche Dichtelemente lagestabil gegen die Tischoberfläche gesaugt werden. Bei all diesen bekannten Tischausführungen werden die Werkstücke entweder per Hand vom Maschinenbediener aufgelegt oder mittels spezieller Transport-Beschickungseinrichtungen in Bearbeitungsposition gebracht und nach durchgeführter Bearbeitung in der gleichen Weise entnommen.

Es werden auch kraftschlüssige Spannelemente eingesetzt, meist sind dies pneumatische Spannzylinder, Hebelspanner, Spannpratzen oder ähnliches.

Eine Sonderversion stellt noch das Spannen von Plattenwerkstücken mit Druckrollen dar. Dabei walzen im engen Verbund mit dem Bearbeitungsaggregat Rollen (i.d.R. 4 Stück) über das plattenförmige Werkstück und pressen es auf die plane Tischoberfläche. Die durch den Anpreßdruck erzielte Reibungskraft ist größer als die Zerspanungskraft des Fräsers und reicht für die Fixierung des Werkstückes.

Besonders eignen sich Druckrollen für das Ausschneiden beliebiger Werkstückkonturen aus Formatplatten ohne Anpassung von Spannvorrichtungen.

Dabei werden unter die Werkstückplatte meist Verschleißplatten untergelegt, um ein Zerfräsen der Tischfläche zu vermeiden. Zur Erhöhung der Spannkraft wird das Druckrollensystem oft in Verbindung mit anderen Spannsystemen eingesetzt, z.B. mit Spannpratzen, und auch Vakuum ist möglich bei Verzicht auf eine Verschleißplatte.

Es ist ferner eine derartige Bearbeitungsmaschine bekannt, bei der der Arbeitstisch ein flexibles Band aufweist, das endlos ausgebildet über Transportrollen verläuft und mit einer Wabenstruktur oder Perforation versehen ist. Das Elastomerband wird mittels des angetriebenen Rollensystems über einen Vakuum-Maschinentisch gezogen und transportiert flächige Werkstücke in die Maschine bis zur Bearbeitungsposition. Durch die durchlässige Elastomerbandfläche und den darunterliegenden durchlässigen Tisch, der das Band abstützt, wird das Werkstück festgesaugt und kann bearbeitet werden, worauf das Werkstück über das Band weitertransportiert wird.

Derartige Endlos "Teppich"- Systeme sind vorteilhaft, weil sie das einmal festgesaugte Werkstück unmittelbar zur Bearbeitungsstelle, ggf. auch zur nächsten Bearbeitungsstufe, transportieren können, ohne daß ein weiteres Ausrichten und Festspannen erforderlich wäre. Nachteile ergeben sich dann, wenn das Bearbeitungswerkzeug bei der Bearbeitung die Auflagefläche durchstoßen muß. So wird bespielsweise bei Formatierungsarbeiten, bei denen durch das Werkstück hindurchgefräst werden muß, die Oberfläche des "Teppichs" zwangsläufig beschädigt, so daß dieser häufig ausgewechselt werden muß, was erhebliche Kosten verursacht.

Durch die DE 199 11 256 A1 ist eine mit einem endlosen Förderband ausgerüstete Fördereinrichtung zum Fördern von stab- oder plattenartigem Fördergut, z.B. von Schnitthölzern, bekannt geworden, bei der die Reibungskraft zwischen Förderband und Fördergut dadurch erhöht wird, daß die Aufnahmestation mit einer Absaugstation versehen ist. Das Förderband ist mit einem Öffnungsmuster versehen, durch das der Unterdruck das Fördergut auf das Förderband suagt.

Eine ähnliche Unterdruck-Saugvorrichtung zeigt die DE 39 37 668. Hier sollen auf einem endlosen Plattenbandförderer leichtgewichtige Behälter aus Kunststoff durch Festsaugen gesichert werden.

Der Erfindung liegt daher die Aufgabe zugrunde, einen gleichzeitig als Transporteinrichtung ausgebildeten Arbeitstisch für CNC- und BAZ-Maschinen zu schaffen, bei dem durch die Bearbeitung beschädigte Teile des bewegten Arbeitstisches schnell und mit geringem Kostenaufwand ausgetauscht werden können.

Gelöst wird die gestellte Aufgabe durch die Gesamtheit der im Patentanspruch 1 angegebenen Merkmale.

Die den Arbeitstisch bildenden Lamellen können bei Beschädigung durch Bearbeitungswerkzeuge einzeln entnommen und durch neue ersetzt werden. Der so gebildete Lamellentisch kann durch einen geeigneten Antrieb in beliebigen Bewegungsrichtungen auf dem Maschinenbett verschiebbar sein, wobei diese Verschiebebewegung wiederum numerisch steuerbar ist, um das Werkstück in die nächste Arbeitsposition zu überführen. Gemäß einer bevorzugten Ausführungsform wird die Arbeitstischplatte jedoch von einem aus Lamellen bestehenden endlosen Band gebildet, das über zwei Umlenkrollen geführt ist, von denen die eine derart antreibbar ist, daß das so gebildete Lamellenband das Werkstück über vorbestimmte Entfernungsschritte transportiert.

Die Lamellen bestehen vorzugsweise aus Leisten, die auf ein zwei- oder mehrbahniges Transportkettensystem aufgeschraubt oder aufgeklemmt sind.

Die Lamellen sind aus einem luftdurchlässigen Material gefertigt oder mit Perforationen versehen, und unter dem die Tischoberfläche bildenden Lamellenband bzw. unter dem das Band abstützenden Träger befindet sich eine Vakuum-Absaugvorrichtung, über die das auf dem Lamellenband liegende Werkstück festgesaugt werden kann, wodurch das Werkstück während der Bearbeitung und während des Transportes fixiert bleibt.

Die Spalten zwischen den Lamellen sind sehr gering und können durch Dichtschnüre oder dergleichen abgedichtet werden, damit das Unterdrucksystem flächendeckend wirkt.

Der das Lamellenband abstützende Träger bzw. die darunter befindliche Vakuumkammer kann in getrennt schaltbare Abschnitte unterteilt sein, damit das Vakuum gezielt an Form und Größe des Werkstücks angepaßt werden kann.

Außerdem kann der Unterdruck des Vakuums regelbar ausgelegt sein für verschiedene Materialien der Werkstücke oder Betriebszustände, z.B. Transport, Bearbeitung.

Bis zum Austausch kann das gesamte Lamellenband mehrfach überplant werden, und bei Beschädigungen können auch einzelne Leisten ausgetauscht werden.

Zur Lagebestimmung von Werkstücken ist es möglich, auf der Seite und/oder in Längsrichtung wirkende Anschläge auf dem Lamellenband aufzusetzen. Ebenso können feste oder gesteuerte Seiten- und Längsanschläge zur Werkstückpositionierung eingesetzt werden.

Die Transportgeschwindigkeit ist über einen geregelten Antriebsmotor stufenlos einstellbar, und durch entsprechende Steuerung kann eine exakte Positionierung des Werkstücks in der nächsten Arbeitsstellung eingestellt werden. Zur Vermeidung von Verschiebungen erfolgt die Bewegung des Lamellentisches formschlüssig.

Besonders geeignet ist das System zum kombinierten Einsatz mit einem Druckrollensystem, da der Vorteil des automatischen Werkstücktransports mit einer preisgünstigen Verschleiß-Tischoberfläche gegeben ist. Auch die Zuschaltung der Vakuumunterstützung ist einfach herbeizuführen und beeinträchtigt nicht die anderen Funktionen.

Die Lamellen können aus luftdurchlässigem Material bestehen, so daß Saugnäpfe zur Werkstückhalterung aufgesetzt werden können. Für diese sind dann zweckmäßigerweise Rastausnehmungen vorzusehen.

Nachstehend wird ein Ausführungsbeispiel der Erfindung anhand der Zeichnung beschrieben. In der Zeichnung zeigen:
Fig. 1 ist eine schematische perspektivische Darstellung einer CNC-Bearbeitungsmaschine mit dem erfindungsgemäß ausgebildeten Arbeitstisch;
Fig. 2 ist eine perspektivische Darstellung des den Arbeitstisch bildenden endlosen Lamellenbandes;
Fig. 3 ist eine schematische Seitenansicht des Lamellenbandes gemäß Fig. 2;
Fig. 4 ist eine Einzelansicht der Lamellenbefestigung durch Kopfschrauben von der Seite gesehen;
Fig. 5 ist eine Teilansicht der Befestigung gemäß Fig. 4 in Richtung des Förderbandes betrachtet;
Fig. 6 ist eine abgewandelte Ausführung der Lamellenbefestigung von der Seite betrachtet;
Fig. 7 ist eine Einzelheit der Lamellenbefestigung gemäß Fig. 6 in Förderbandrichtung betrachtet.

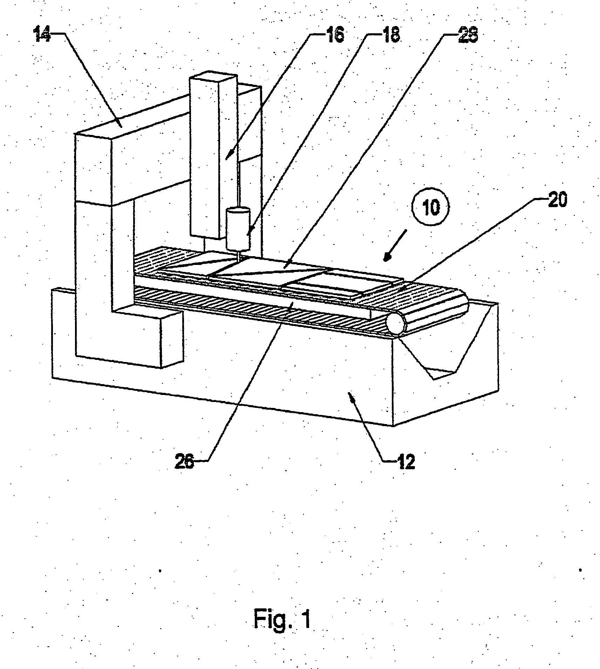

Die CNC-Bearbeitungsmaschine 10 gemäß Fig. 1 weist ein Maschinengrundgestell 12, ein Maschinenportal 14 und einen das Bearbeitungsaggregat 18 tragenden Ausleger 16 auf. Über dem Maschinengrundgestell 12 ist als Arbeitstisch ein endloses Lamellentransportband 20 angeordnet, welches über eine Antriebsscheibe 22 und eine Umlenkscheibe 24 läuft.

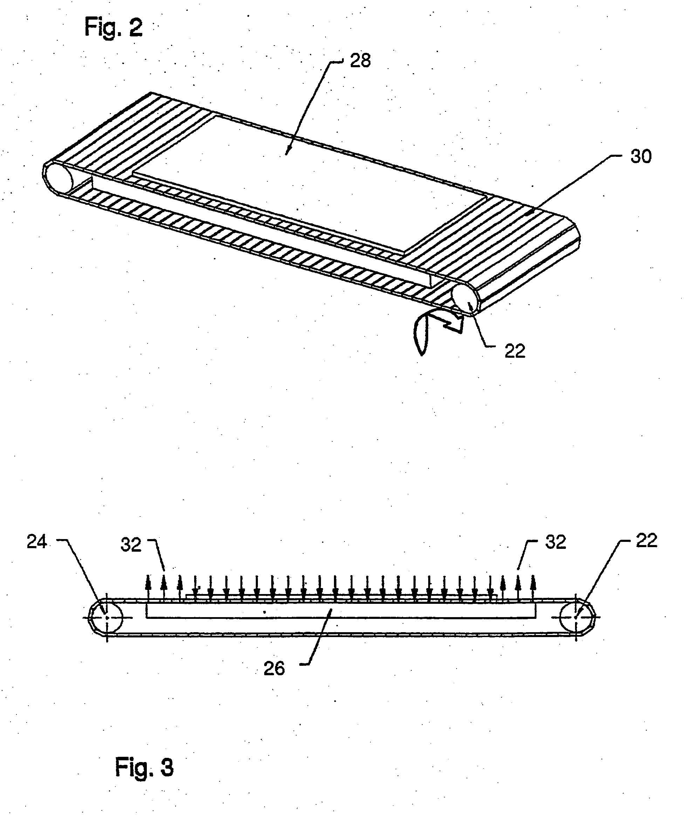

Im Bearbeitungsbereich wird das Lamellenband 20 durch einen luftdurchlässigen Trägertisch abgestützt, unter dem sich eine Vakuumkammer 26 befindet. In der schematischen Darstellung gemäß Fig. 2 und 3 ist dieser Trägertisch mit der Vakuumkammer vereinigt dargestellt. Die zweckmäßigerweise aus Holz bestehenden Lamellen 30, die gelenkig miteinander verbunden sind, weisen Perforationen auf, über die das Werkstückrohteil 28 festgelegt werden kann.Der Vakuum-Unterdruck kann regelbar ausgeführt sein.

Die Vakuumkammer kann in verschiedene Sektionen aufgeteilt sein, die wahlweise an den Unterdruckerzeuger anschließbar sind, um das Vakuum gezielt aufzubringen und Verlustzonen 32 zu vermeiden, wie sie in Fig. 3 dargestellt sind.

Der Arbeitstisch kann durch die Transportbewegung einer Selbstreinigung unterworfen werden, wobei die Reinigungswirkung noch durch entsprechend angeordnete Bürsten verbessert werden kann.

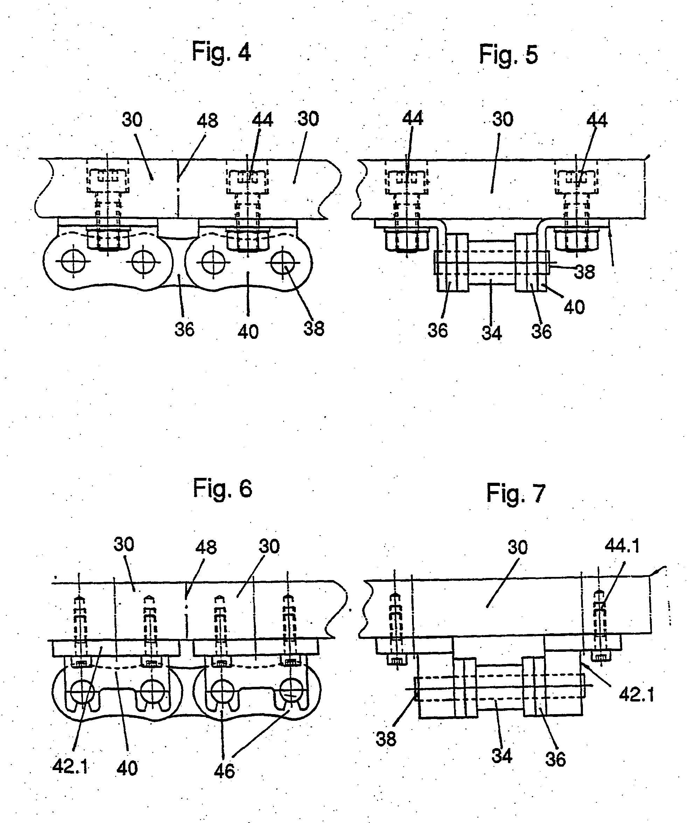

In den Fig. 4 bis 7 sind Möglichkeiten der auswechselbaren Befestigung der Lamellen 30 dargestellt, die von zwei seitlichen Förderbändern getragen werden. In den Fig. 4 bis 7 ist jeweils nur die Befestigung auf einer Seite ersichtlich. Auf der gegenüberliegenden Seite erfolgt die Befestigung in entsprechender Weise. Die Förderketten weisen Gelenkrollen 34 auf, die durch Verbindungsglieder 36 gelenkig miteinander verbunden sind. Auf seitlich aus den Gelenkrollen vorstehende Gelenkzapfen 38 sind die vertikalen Schenkel 40 an Winkelstücken 42 aufgesteckt, die zu diesem Zweck mit Löchern versehen sind. Auf dem horizontalen Schenkel der Winkelstücke 42 sind die Lamellen 30 mittels Kopfschrauben 44 festgelegt.

Die Fig. 6 und 7 zeigen eine weitere Möglichkeit der Befestigung. Hier sind die Winkelstücke 42.1 als Kunststoff-Formteile ausgebildet, die mit ihrem horizontalen Schenkel an jeweils einer Lamelle mittels Schrauben 44.1 verbunden sind. Die vertikalen Schenkel 40 weisen Löcher auf, die nach unten über Schlitze 46 offen sind. Die Trennfuge 48 zwischen benachbarten Lamellen 30 ist dichtend ausgeführt, indem entweder die Lamellen dicht aneinanderliegen oder mit zusätzlichen Dichtungsmitteln versehen sind.

Die letztgenannte Ausführung der Befestigung hat den Vorteil, daß mit den Kunststoff-Formteilen versehene Lamellen bereitgehalten werden können und zum Austausch beschädigte Lamellen einfach von den Gelenkzapfen abgehoben werden können, worauf eine neue Lamelle radial auf die Gelenkzapfen 38 durch Aufspreizen des Schlitzes 46 aufklemmbar sind.

### Bezugszeichenliste

- 10: CNC-Bearbeitungsmaschine
- 12: Maschinengrundgestell
- 14: Maschinenportal
- 16: Ausleger
- 18: Bearbeitungsaggregat
- 20: Lamellentransportband
- 22: Antriebsscheibe
- 24: Umlenkscheibe
- 26: Vakuumkammer
- 28: Werkstückrohteil
- 30: Lamellen
- 32: Verlustzone
- 34: Gelenkrollen
- 36: Verbindungsglied
- 38: Gelenkzapfen
- 40: vertikale Schenkel
- 42: Winkelstücke
- 44: Kopfschrauben
- 46: Schlitze
- 48: Trennfuge

## Patentansprüche

1. Arbeitstisch für CNC- und BAZ-Maschinen zur Holzbearbeitung und zum Transport von Werkstücken mit den folgenden Merkmalen:
- die Tischplatte wird von einem Band (20) gebildet, das über dem Maschinenbett bewegbar ist;
- das Band besteht aus quer zur Bewegungsrichtung angeordneten gelenkig miteinander verbundenen Lamellen (30); die Lamellen (30) bilden eine plane und geschlossene Arbeitsplatte;
- die Lamellen (30) sind luftdurchlässig;
- unter der Lamellenplatte befindet sich eine Vakuumkammer (26) zum Ansaugen des Werkstücks (28);
- die Lamellen (30) sind leicht auswechselbar miteinander oder/und mit einem Träger verbunden.

2. Arbeitstisch nach Anspruch 1,
**dadurch gekennzeichnet, daß** das Lamellentransportband (20) als endloses Band ausgebildet und über durch Wellen verbundene Scheiben (22 bzw. 24) geführt ist, von denen wenigstens eine Welle angetrieben ist und die Vorschubbewegung formschlüssig überträgt.

3. Arbeitstisch nach den Ansprüchen 1 und 2,
**dadurch gekennzeichnet, daß** die Lamellen (30) auf einem Trägerkettensystem aufgeklemmt oder aufgeschraubt sind.

4. Arbeitstisch nach Anspruch 1,
**dadurch gekennzeichnet, daß** die Vakuumkammer (26) in einzeln absaugbare Kammerabschnitte unterteilt ist.

5. Arbeitstisch nach Anspruch 1,
**dadurch gekennzeichnet, daß** zwischen den Lamellen (30) Dichtungsstränge angeordnet sind oder durch entsprechend enge Spaltbreiten Dichtwirkung erzielt wird.

6. Arbeitstisch nach einem der Ansprüche 1 bis 5,
**dadurch gekennzeichnet, daß** die Transportgeschwindigkeit des Lamellenbandes stufenlos steuerbar ist.

7. Arbeitstisch nach einem der Ansprüche 1 bis 6,
**dadurch gekennzeichnet, daß** in Querrichtung und/oder Längsrichtung wirkende Lagebestimmungsanschläge vorgesehen sind.

8. Arbeitstisch nach Anspruch 1,
**dadurch gekennzeichnet, daß** Bürsten zur Selbstreinigung angeordnet sind.

9. Arbeitstisch nach einem der Ansprüche 1 bis 8,
**dadurch gekennzeichnet, daß** die Lamellen aus luftdurchlässigem Material bestehen und Rastausnehmungen für aufsetzbare Saugnäpfe aufweisen.

10. Arbeitstisch nach Anspruch 3,
**dadurch gekennzeichnet, daß** die Lamellen (30) über Winkelstücke (42) an den Gelenkzapfen (38) seitlicher Förderketten festgeschraubt sind, wobei die mit Löchern versehenen Winkelstücke seitlich auf die Gelenkzapfen (38) aufsteckbar sind.

11. Arbeitstisch nach Anspruch 3,
**dadurch gekennzeichnet, daß** die Lamellen (30) über Winkelstücke (42.1) mit seitlichen Förderketten verbunden sind, wobei die Winkelstücke als Kunststoff-Formteile ausgebildet sind, die über Schlitze (46) auf die Gelenkzapfen aufklemmbar sind.
